# EUROPEAN PATENT APPLICATION

(11) **EP 2 219 150 A1**
(43) Date of publication of application: **18.08.2010**
(21) Application number: 10001610.4
(22) Date of filing: 17.02.2010
(51) Int. Cl.: G06Q 30/00

(54) **Internet marketing channel optimization**

(30) Priority: 17.02.2009 US 153195; 17.02.2009 US 153196
(71) Applicant: ACCENTURE Global Services GmbH, 8200 Schaffhausen (CH)
(72) Inventor: Williams, Michael J., San Francisco CA 94105 (US); Umblijs, Andris, Knaphill Woking GU21 2TR (GB); Srivastava, Janmesh, London TW7 5BA (GB); Kirkby, Stephen Denis, Unley Park SA 5061 (AU); Roytman, Anatoly, Weston MA 02493 (US)
(74) Representative: Müller-Boré & Partner Patentanwälte

(57) **Abstract**

A system is configured to optimize an Internet marketing channel for a multichannel marketing campaign. The system includes an optimization model storage unit storing a plurality of optimization models for optimizing the Internet marketing channel. The system also includes a statement unit determining an estimated miniature profit and loss (P&L) for each item of the Internet marketing channel. The miniature P&L for each item links a potential investment in the item with estimated revenue and profit for the potential investment. A revenue response unit generates revenue response data for each item based on the miniature P&L for each item, and a profit response unit generates profit response data for each item based on the miniature P&L for each item. An efficiency frontier response unit generates efficiency frontier response data from the revenue response data and the profit response data, wherein the efficiency frontier response data identifies a point of diminishing returns for each item based on the investment amount in each item.

## Description

### PRIORITY

This application claims priority to U.S. provisional patent application serial number 61/153,195, filed February 17, 2009, and entitled "Paid Search Optimization", which is incorporated by reference in its entirety. This application also claims priority to U.S. provisional patent application serial number 61/153,196, filed February 17, 2009, and entitled "Display Advertising Optimization", which is incorporated by reference in its entirety.

### BACKGROUND

Many businesses engage in advertising through one or more channels, such as TV, radio, Internet, etc., to improve their bottom line, which is typically to maximize profits. However, it is a difficult task to correlate advertising and marketing expenditures with profits. Furthermore, it is difficult to ascertain how to allocate a marketing budget among different types of marketing channels to maximize profit overall.

One channel of advertising often included in a marketing campaign is paid search, whereby advertisers contract for placement within search results generated by search engines. Ad placement within the search results is generally determined in accordance with a competitive bidding process. Companies may bid on words and placement that describe their product.

Another channel of advertising often included in a marketing campaign is display advertising, whereby advertisers contract for placement of an ad, such as a banner ad, within a web site or web page. Ad placement within a display can also be determined in accordance with a competitive bidding process.

In both types of advertising channels, it is difficult for companies to determine how much to bid and how much to budget in comparison with other advertising channels. Furthermore, with regard to paid search and display advertising, as well as other types of marketing channels, it is difficult to ascertain whether sales are attributed to particular marketing channel. As a result, companies face difficult challenges to effectively allocate marketing investments to maximize return on investment (ROI).

### BRIEF DESCRIPTION OF DRAWINGS

The embodiments of the invention will be described in detail in the following description with reference to the following figures.

Figure 1 illustrates a method for optimizing investment in an Internet marketing channel, according to an embodiment;

Figure 2 illustrates a method for optimizing investment in display advertising, according to an embodiment;

Figure 3 illustrates a method for optimizing investment in paid search, according to an embodiment;

Figure 4 illustrates a miniature Profit & Loss statement, according to an embodiment;

Figure 5 illustrates a method of obtaining revenue per conversion, according to an embodiment;

Figure 6 illustrates a miniature Profit & Loss statement, according to an embodiment;

Figure 7A illustrates a graph detailing revenue response data, according to an embodiment;

Figure 7B illustrates a graph detailing profit response data, according to an embodiment;

Figure 8 illustrates an efficiency frontier response curve, according to an embodiment; and

Figure 9 illustrates a system for optimizing Internet channel marketing investment, according to an embodiment.

### DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments.

### 1. Overview

Optimization of a company's marketing campaign may include determining an investment in a combination of marketing channels that is estimated to achieve a business objective, such as maximizing profits. According to embodiments, systems and methods are provided to optimize a marketing campaign. This may include determining an investment in a combination of marketing channels, as well as optimizing each individual marketing channel. A marketing channel as used herein is a type or category of advertising.

According to embodiments, investments to maximize revenue or profits in Internet marketing channels, such as paid search and display advertising, are determined. Paid search typically involves the payment for a position or rank in search results for one or more key words. For example, when a keyword search is performed using an Internet search engine, search results are generated and shown in a ranked-order list. Along with those search results, a set of marked advertisements (i.e., ads) may also be shown, for example, to one side of the actual search results. The ads may also be presented in a ranked-order list from top-to-bottom of the web page. An advertiser may pay for a particular ranking for a particular keyword or set of keywords. In many instances, advertisers enter a competitive bidding process for a particular ranking for a particular keyword. Display advertising is different from paid search and involves the payment for placement of an ad, such as a banner ad, within a web site or web page. Advertisers may enter a competitive bidding process for placement of a display ad on a particular web page and/or for placement in a particular location on a web page.

Paid search and display advertising are optimized using modeling. For example, a system assigns a value to each visit to a web page associated with a keyword search based on revenue or profit generated from the visit. Profitability models are built for every keyword (also referred to simply as word) based on a referring search engine and include multiple variables, such as visitor geography, time of day, etc. These models serve as a basis for developing bidding strategies, which may then be used to bid for paid search. The bidding strategies optimize the paid search by applying the bidding strategies to keywords to maximize profit.

Profitability and bidding strategies are also determined for display advertising, where advertisers bid on web site real-estate for advertising. For example, a web page visit resulting from a click-through on a display ad is assessed against pre-defined business outcomes. The system assigns a value for each visit associated with a referring display based on business outcomes. Profitability models are built for every referring click-through and include multiple variables such as ad type, visitor geography, time of day, etc. These models serve as a basis for publishing strategies that are communicated to ad publishing systems.

Optimization may include applying multivariate econometric modeling to determine the impact of advertising on revenue. In the case of paid search, revenue response curves are constructed for each keyword and position for a paid search. A bidding strategy is determined which includes a competitive allocation of funds across different keywords and positions for paid searches based on revenue return on investment (ROI). Also, a budget for paid searches is determined in competition with other marketing investment options including advertising on other channels.

In the case of display advertising, revenue response curves are constructed for different display ads, for example, categorized by one or more attributes. The attributes may be based on a location on a web page or location within a web site hierarchy, creative used in the ad, etc. A curve may be generated for each category. A bidding strategy is determined which includes a competitive allocation of funds across the different categories of display ads based on ROI. Also, a budget for display advertising is determined in competition with other marketing investment options including advertising on other channels.

For the paid search optimization and display advertising optimization, modeling and response curves, such as response curves for revenue and ROI, may be determined using the systems and methods described in co-pending U.S. Patent Application Serial Number 11/483,401, entitled "Modeling Marketing Data" by Andris Umblijs et al., filed July 7, 2006, which is incorporated by reference in its entirety.

### 2. Optimizing Internet Marketing Channel Investments

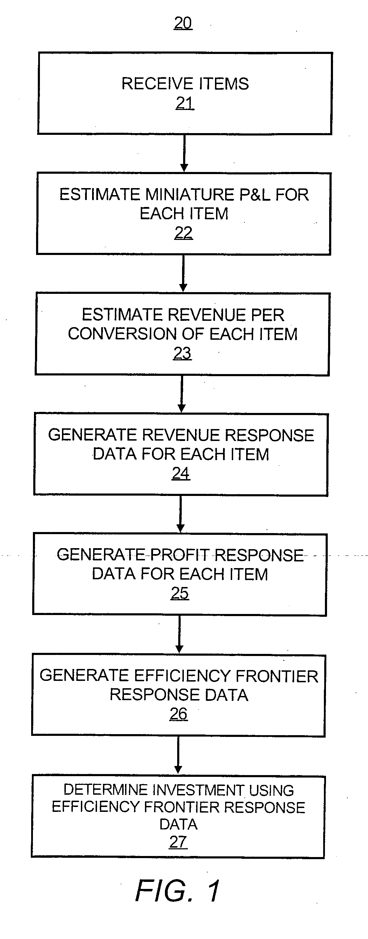

Figure 1 illustrates a method 20 for optimizing an investment in an Internet marketing channel, according to an embodiment. An Internet marketing channel includes some type of online advertising. Paid search and display advertising are two examples of Internet marketing channels.

At step 21, items are received. An item may include an ad or content used for advertising or some attributes of the ad or content. For example, an item may be an ad position, a paid search word, a banner ad, etc. The received items are candidates that a user is considering using in the Internet marketing channel as part of the marketing campaign. Thus, the user may indicate the items to be used as candidates. The method 20 evaluates the items to estimate the optimum investment in one or more of the items that should be used for the actual marketing.

At step 22, a miniature Profit & Loss (mini P&L) is estimated for each item. The mini P&L links investment in the item to revenue and profit. The mini P&L may include inputs describing the item and an estimation of amount spent on the item (i.e., investment), and also include outputs describing the P&L for the item. The outputs of the mini P&L may be estimated based on a historic analysis of data for past investments, and may be dynamic, and changing over time. Examples of the outputs in the mini P&L may include profit, ROI, etc.

At step 23, revenue per conversion is estimated for each item. Conversion may be an action on an item, such as a click on an ad. Revenue per conversion may be an estimation of revenue generated in response to the conversion. Multivariate econometric regression may be used to estimate the revenue per conversion. The multivariate econometric regression may consider other market stimuli, because in some cases it is difficult to determine whether the revenue resulted from the item or some other factor. Revenue per conversion may be estimated separately for direct online sales conversions from a website, for conversions driving direct sales through "traditional" sales channels, and for indirect longer term effect through brand building conversions. In another embodiment, step 23 may also be considered a sub-step of step 22 in which revenue per conversion is determined during the process of estimating the parameters of the mini P&L.

At step 24, revenue response data is generated based on the mini P&L for each item. The revenue response data may rank the items based on revenue returns per monetary unit invested for each item. For example, the items are ordered from the highest revenue generation per monetary unit spent to the lowest revenue generation per monetary unit spent.

At step 25, for each item, profit response data is generated based on the mini P&L for each item. The profit response data may rank the items based on revenue returns per monetary unit invested for each item. For example, the items are ordered from the highest profit generation per monetary unit spent to the lowest profit generation per monetary unit spent.

At step 26, efficiency frontier response data is generated from the revenue response data and the profit response data. The efficiency frontier response data may identify a point of diminishing returns for ROI that is estimated for each item. The efficiency frontier response data may include a ranking of the items in decreasing order by their revenue or profit generation from monetary unit invested.

At step 27, an investment in one or more of the items is selected based on the efficiency frontier response data to maximize returns. For example, a highest ranking item in the efficiency frontier data may be selected for actual investment.

### 3. Optimizing Display Advertising Investment

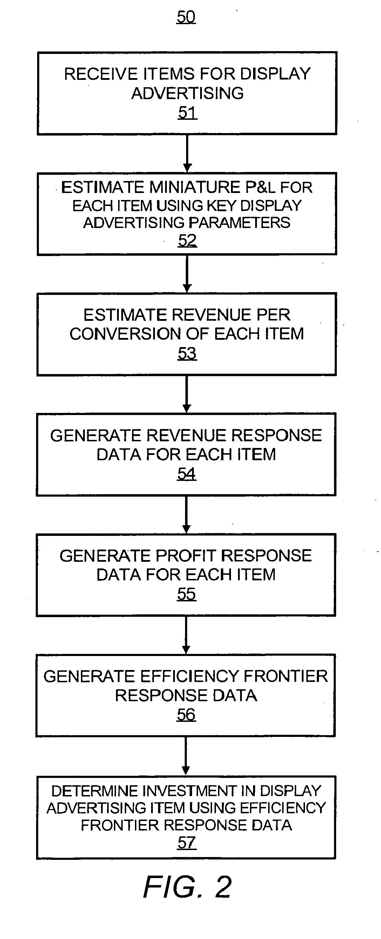

According to an embodiment, a method 50 for optimizing display advertising is shown in Figure 2. The method 50 includes applying the method 20 shown in figure 1 to display advertising as the particular Internet marketing channel. At step 51, items for display advertising are received. The items may include different ads that can be displayed on web pages. The ads are different because they include one or more different attributes. Examples of the attributes include content, location of the ad on a web page, etc. The received items are candidates that a user is considering using or evaluating to determine which item is estimated to provide the best return.

At step 52, mini P&L is estimated for each item. For example, key display advertising parameters, such as estimated bid price to win an ad placement, estimated number of clicks, and estimated conversion rate are determined for example through historical analysis of previous investments and modeling. These parameters may be included in the mini P&L for each item.

At step 53, revenue per conversion is estimated for each item. Conversion may be a click on a display ad. Revenue per conversion may be an estimation of revenue generated in response to the conversion. Multivariate econometric regression may be used to estimate the revenue per conversion. In another embodiment, step 53 may also be considered a sub-step of step 52 in which revenue per conversion is determined during the process of estimating the parameters of the mini P&L.

Similar to steps 24-26, at step 54, revenue response data is generated based on the mini P&L for each item. At step 55, for each item, profit response data is generated based on the mini P&L for each item. At step 56, efficiency frontier response data is generated from the revenue response data and the profit response data. The efficiency frontier response data may identify a point of diminishing returns for ROI that is estimated for each item.

At step 57, an investment in one or more of the items is selected based on the efficiency frontier response data to maximize returns. For example, a highest ranking item in the efficiency frontier data may be selected for actual investment. For example, investment in a particular display ad may be selected because the frontier response data indicates that a particular investment in that display ad provides the best return.

Also, frontier response data may be generated for multiple different marketing channels. An increase in the display advertising marketing channel may be stopped when revenue and/or profit ROI is reached when the ROI is larger for another marketing channel, e.g., TV advertising, paid search, other promotions, etc. The maximum increase in investment may then be set as the display advertising budgeting, which determines a total amount of money to be invested in display advertising. Thus, total investment in display advertising may be competitively estimated and allocated in competition with all other marketing channel investment options. This allocation may be determined by comparing marginal returns of each incremental dollar on the response curves of all investment options.

### 4. Optimizing Paid Search Investment

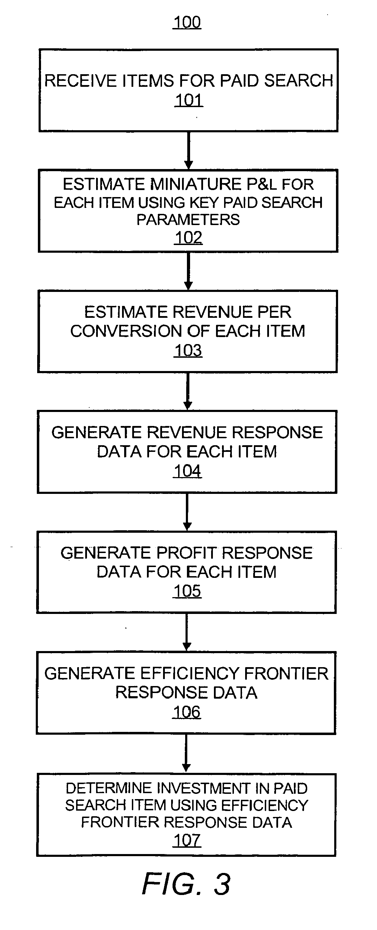

According to an embodiment, a method 100 for optimizing paid search is shown in Figure 3. The method 100 includes applying the method 20 shown in figure 1 to paid search as the particular Internet marketing channel. At step 101, items for paid search are received. The items may include different words or different sets of words and different positions for ads related to the words. As described above, a word may be a keyword input into a search engine, and a positions is a position for an ad in ordered ad results associated with the keyword.

At step 102, a mini P&L is estimated for each item. For example, key paid search parameters, such as bid price for each position, estimated number of clicks at each position and conversion rate at each position may be experimentally measured on rotating basis with a dedicated small "experimental budget" or these parameters may be estimated from historical analysis of previously purchased words at particular positions, which are known to the company and do not need to be re-tested. The key paid search parameters may be included in the mini P&L for each item.

At step 103, revenue per conversion is estimated for each item. Conversion may be a click on an ad in a particular position. Revenue per conversion may be an estimation of revenue generated in response to the conversion. Multivariate econometric regression may be used to estimate the revenue per conversion. In another embodiment, step 103 may also be considered a sub-step of step 102 in which revenue per conversion is determined during the process of estimating the parameters of the mini P&L.

Similar to steps 24-26 and 54-56, at step 104, revenue response data is generated based on the mini P&L for each item. At step 105, for each item, profit response data is generated based on the mini P&L for each item. At step 106, efficiency frontier response data is generated from the revenue response data and the profit response data. The efficiency frontier response data may identify a point of diminishing returns for ROI that is estimated for each item.

At step 107, an investment in one or more of the items is selected based on the efficiency frontier response data to maximize returns. For example, a highest ranking item in the efficiency frontier data may be selected for actual investment. For example, investment in a particular display ad may be selected because the frontier response data indicates that a particular investment in that display ad provides the best return. Also, frontier response data may be generated for multiple different marketing channels. An increase in the paid search marketing channel may be stopped when revenue and/or profit ROI is reached when the ROI is larger for another marketing channel, e.g., TV advertising, paid search, other promotions, etc. The maximum increase in investment may then be set as the paid search budgeting, which determines a total amount of money to be invested in display advertising. Thus, total investment in paid search may be competitively estimated and allocated in competition with all other marketing channel investment options. This allocation may be determined by comparing marginal returns of each incremental dollar on the response curves of all investment options.

### 5. Example of Optimizing Paid Search

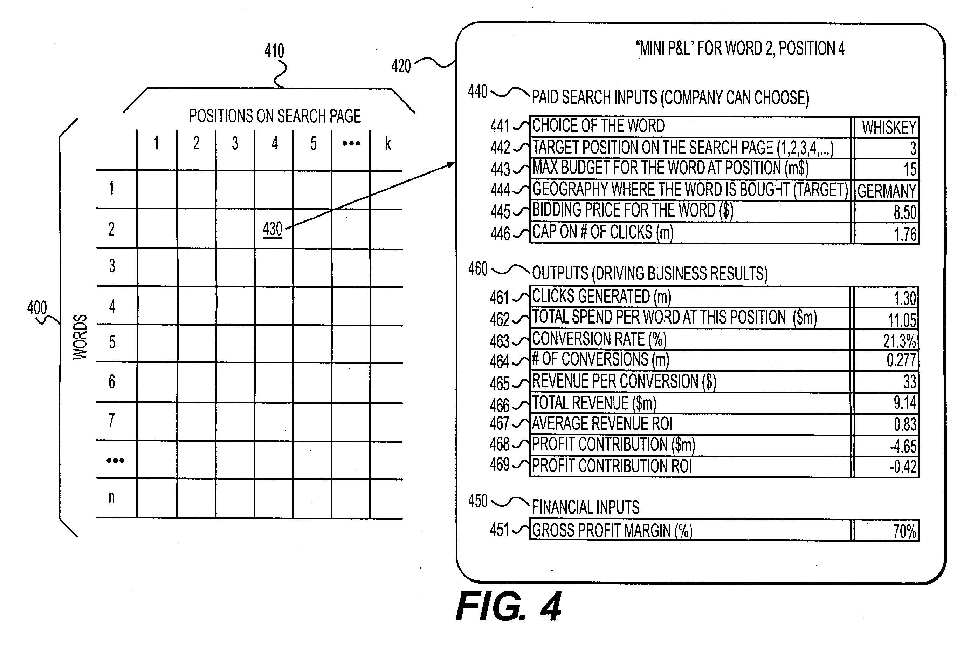

Figures 4-8 illustrate an example of optimizing paid search investment, according to an embodiment. Figures 4-8 are described with respect to the method 100 shown in figure 3 to illustrate examples for the steps of the method 100 for paid search optimization.

According to the method 100 at step 102, a mini P&L is estimated. In figure 4, a mini P&L is shown. A mini P&L may be estimated for each word 1-n, shown as 400, and each position 1-k, shown as 410. For example, the mini P&L 420 is estimated for word number 2 at position 4, shown as 430, in search results. The mini P&L 420 may comprise paid search inputs 440 describing the word and position. The inputs 440 may include "Choice of the word" 441 indicating the word chosen; "Target position on the search page (1,2,3,4,...)" 442 indicating at which position in the search results page the investor would like a corresponding ad to appear; "Max budget for the word at position (m$)" 443 indicating the maximum amount the investor would like to spend for a corresponding ad at a particular position in millions; "Geography where the word is bought (target)" 444 indicating in which country the word is bought; "Bidding price for the word ($)" 445 indicating the amount of money the investor would like to bid for the word to display a corresponding ad at particular position; and "Cap on # of clicks (m)" 446.

Financial inputs 450 may include a "Gross Profit Margin (%)" 451 which may be a targeted gross profit margin identified and input.

The mini P&L 420 may also comprise outputs 460. The outputs 460 of the mini P&L 420 may include "Clicks Generated (m)" 461; "Total spend per word at this position ($m)" 462; "Conversion rate (%)" 463; "# of Conversions" 464; "Revenue per conversion ($)" 465; "Total Revenue ($m)" 466; "Average Revenue ROI" 467; "Profit Contribution" 468; and "Profit Contribution ROI" ($m) 469 to describe linking the investment in this word and the particular position to revenue and profit. The inputs 440 and outputs 460 are examples of key paid search parameters, and they may be determined for each mini P&L for each item (e.g., each word and position).

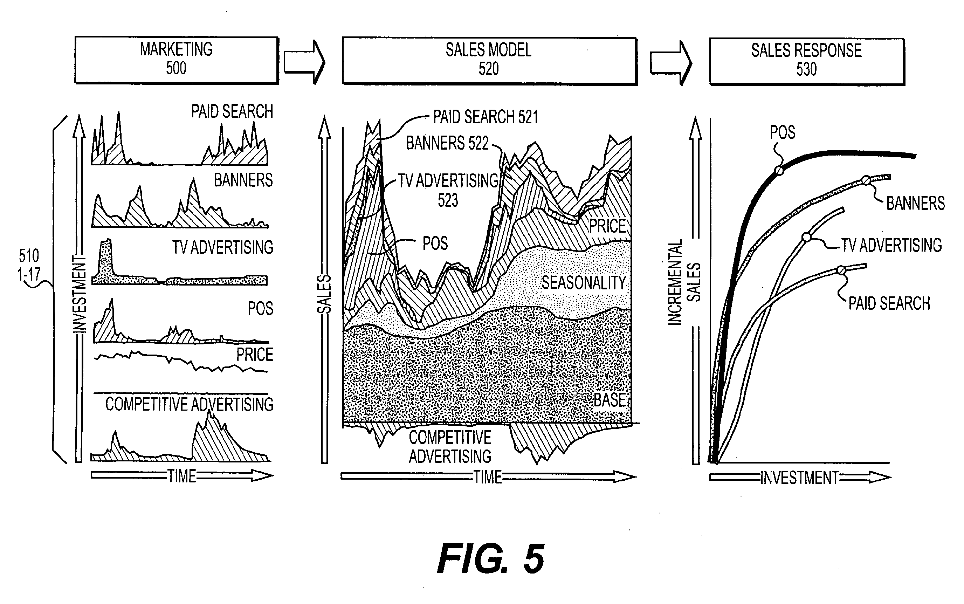

One of the outputs 460 is revenue per conversion, which is also described at step 103. Revenue per conversion may be estimated for each word at each position by the use of multivariate econometric regression simultaneously with other market stimuli. Figure 5 illustrates an example of multivariate econometric analytics. According to figure 5, marketing data 500 for different marketing channels 1-n, shown as 510, is displayed as an investment in that particular marketing channel over time. The marketing data 500 is then input to a sales model 520. The sales model 520 is used to estimate sales over time according to types of marketing channels such as sales as a result of paid search 521, banners 522, TV Advertising 523, etc. are displayed. The multivariate econometric regression used by the model outputs an estimated sales response 530 in which estimated incremental sales is described as a function of investment for each marketing channel. The curves shown under 530 may include efficiency frontier response curves, and a point of diminishing returns may be determined for each curve. The points of diminishing returns indicating a point of maximum returns for investments in the marketing channels.

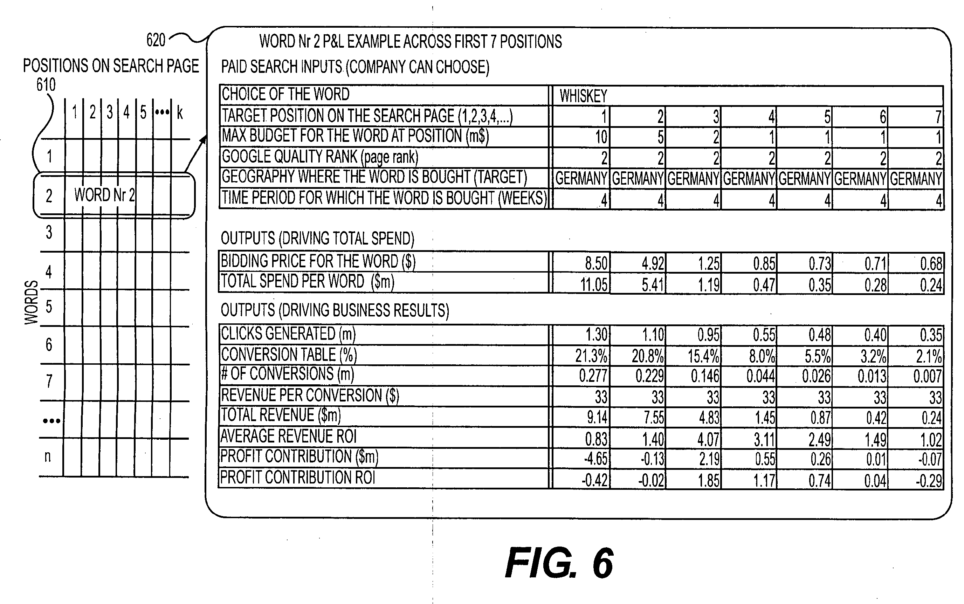

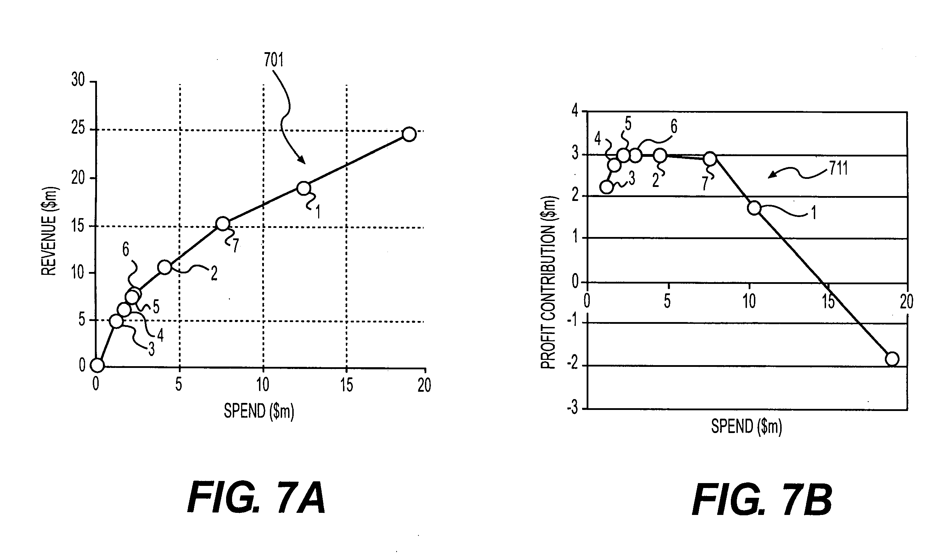

In figure 6, for a particular word such as "Word Nr 2" 610, a mini P&L 620 is estimated for each position 1-k in a search results page. The mini P&L 620 is shown as seven different P&Ls assuming there are seven positions for the word "whiskey". Based on the mini P&L 620 of figure 6, the positions are ranked in the order of revenue returns per dollar invested for each position. For example, the positions are ordered from the highest revenue generation per dollar spent to the lowest revenue generation per dollar unit spent. This ordering may be included in the revenue response data described at step 104 in the method 100. Figure 7A illustrates an example of a curve 701 ordering positions according to estimated revenue generated per amount spent. The curve 701 includes points 1-7 representing ad positions for a keyword. The ordering shows that position 1 may generate the most revenue per amount spent, position 7 may generate the second most revenue per amount spent, and so on.

Figure 7B shows a curve 711 similar to the curve 701 shown in figure 7A but the curve 711 is for profit response data rather than for revenue response data. Profit response data, such as described with respect to step 105 in the method 100, is generated by ranking profits per amount invested. Figure 7B shows points 1-7 representing ad positions for a keyword. The ordering shows that positions 4-6 provide the highest profit per amount spent.

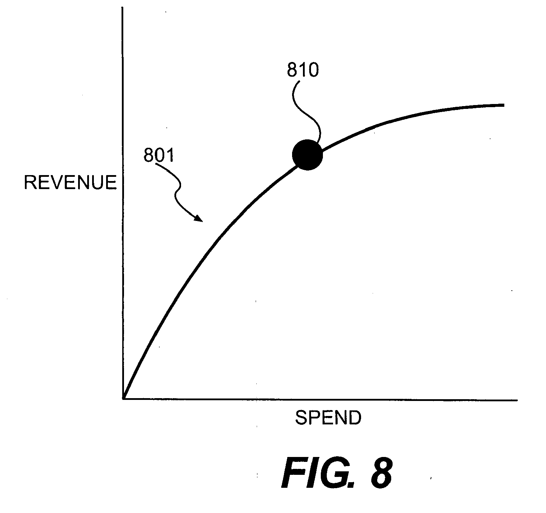

Efficiency frontier response data, such as described with respect to step 106, is generated from the revenue response data and the profit response data. The efficiency frontier response data may include an efficiency frontier response curve 801, such as shown in figure 8. Efficiency response curves are known in the art include risk-reward graphs. According to embodiment, the efficiency frontier response curve 801 illustrates estimated returns for entire investments in a marketing channel. The efficiency frontier response curve 801 includes a point 810 of diminishing returns for ROI for the entire investment in the marketing channel. For example, as investment (i.e., spend) increases past point 810, the estimated revenue minimally increases or does not increase. An efficiency frontier response curve may be generated for each marketing channel to identify the maximum ROI based on revenue or profit for each channel. Then, the curves may be presented to an investment manager through a system interface, such as an optimization dashboard described below, allowing the manager to select a combination of marketing channels for a marketing campaign that maximizes ROI.

### 6. System for Multichannel Marketing Optimization

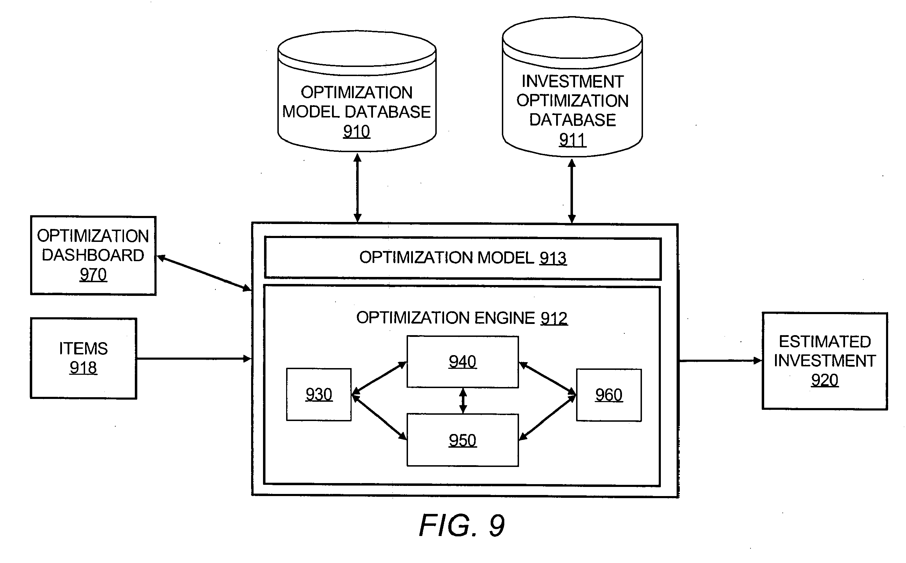

Figure 9 illustrates a system 900 for optimizing multichannel marketing. The system 900 may perform the steps and functions described above. The system 900 includes an optimization model database 910, an investment optimization database 911 and an optimization engine 912. The optimization engine 912 performs steps of the methods described above. The system 900 may be included in a web site back end.

The optimization model database 910 stores various optimization models, such as models for estimating key parameters in the mini P&Ls. The optimization engine 912 extracts an optimization model 913 from optimization model database 910 to perform the steps of the methods discussed above. Results of the optimization performed by the engine 912 including intermediate results such as revenue response data, profit response data, and mini P&Ls as well as efficiency frontier response data, which are stored in the investment optimization database 911. The optimization model 913 may use offline attribution variables and online activity variables coupled with historic user behavior to provide an estimation of an optimal investment for items 918 for a particular Internet marketing channel. Users may select the optimization model used or select certain marketing channels to optimize.

The optimization engine 912 also includes a statement unit 930 determining an estimated mini P&L for each of the items 918 of the Internet marketing channel. The mini P&L for each item links a potential investment in the item with estimated revenue and profit for the potential investment. The statement unit 930 provides the mini P&L to a response unit 940 and a profit response unit 950. The items 918 may be provided or selected by a user or provided by a data source.

The revenue response unit 940 generates revenue response data for each item based on the mini P&L for each item. The revenue response data includes estimated revenues per investment amounts for the items. The profit response unit 950 generates profit response data for each item based on the mini P&L for each item. The profit response data includes estimated profits per investment amounts for the items.

Both revenue the response unit 940 and the profit response unit 950 provide an efficiency frontier response unit 960 with data to generate efficiency frontier response data from the revenue response data and the profit response data. The efficiency frontier response data, which may include an efficiency frontier curve, identifies a point of diminishing returns for each item based on the investment amount in each item. An output of the system as discussed above is an estimated investment 920. The estimated investment 920 may include an investment amount for one or more marketing channels that maximizes revenue and/or profit for the channels. The optimization engine 912 uses the optimization model 913 to identify a point (i.e., investment amount) just prior to where returns diminish.

System 900 also includes an optimization dashboard 970 in which users of the system 900 can input requests to the system and use the functionality of the system as described above. The optimization dashboard may be in the form of a website, GUI, touch-screen, etc.

One or more of the steps of the methods, steps and functions described herein and one or more of the components of the systems described herein may be implemented as computer code stored on a computer readable medium, including storage devices, such as the memory and/or secondary storage, and executed on a computer system, for example, by a processor, application-specific integrated circuit (ASIC), or other controller. The code may exist as software program(s) comprised of program instructions in source code, object code, executable code or other formats. Examples of computer readable medium include conventional computer system RAM (random access memory), ROM (read only memory), EPROM (erasable, programmable ROM), EEPROM (electrically erasable, programmable ROM), hard drives, and flash memory.

According to an aspect, a computer system optimizing an Internet marketing channel for a marketing campaign is provided. The computer system may comprise:
an optimization engine, executed by a processor, wherein the optimization engine includes
   a statement unit determining an estimated miniature profit and loss (P&L) for each item of the Internet marketing channel, wherein the miniature P&L for each item links a potential investment in the item with estimated revenue and profit for the potential investment;
   a revenue response unit generating revenue response data for each item based on the miniature P&L for each item, wherein the revenue response data includes estimated revenues per investment amounts for the items;
   a profit response unit generating profit response data for each item based on the miniature P&L for each item, wherein the profit response data includes estimated profits per investment amounts for the items; and
   an efficiency frontier response unit generating efficiency frontier response data from the revenue response data and the profit response data, wherein the efficiency frontier response data identifies a point of diminishing returns for each item based on the investment amount in each item; and
an optimization model database storing a plurality of optimization models for optimizing the Internet marketing channel.

Also, the Internet marketing channel may be a paid search and each item is a paid search word or a position of a related ad displayed in response to a word.

In some cases, the Internet marketing channel is display advertising and each item is a different display ad.

In certain embodiments, the statement unit determines at least one key parameter including at least one of revenue per conversion, estimated bid price for the item, and estimated number of clicks for each item, and determines the miniature P&L using the at least one key parameter for each item.

Moreover, the optimization engine may determine the revenue per conversion for each item based on market stimuli other than the Internet marketing channel.

It may be that the revenue response unit orders the revenues per investment amounts for the items from highest to lowest or lowest to highest.

Furthermore, the profit response unit may order the profits per investment amounts for the items from highest to lowest or lowest to highest.

Also, the efficiency frontier response unit may generate the efficiency frontier response data based on the orderings in the revenue response data and in the profit response data.

The system may further comprise a selecting unit selecting an investment for an item from the efficiency frontier response data.

In some embodiments, the selected investment in the marketing campaign is applied by using the selected investment as a budget for the Internet marketing channel.

According to another aspect, a method for optimizing an Internet marketing channel for a marketing campaign is provided. The method may comprise:
determining, using a processor, an estimated miniature profit and loss (P&L) for each item of the Internet marketing channel, wherein the miniature P&L for each item links a potential investment in the item with estimated revenue and profit for the potential investment;
generating revenue response data for each item based on the miniature P&L for each item, wherein the revenue response data includes estimated revenues per investment amounts for the items;
generating profit response data for each item based on the miniature P&L for each item, wherein the profit response data includes estimated profits per investment amounts for the items; and
generating efficiency frontier response data from the revenue response data and the profit response data, wherein the efficiency frontier response data identifies a point of diminishing returns for each item based on the investment amount in each item.

In some cases, the Internet marketing channel is paid search and each item is a paid search word or a position of a related ad displayed in response to a word.

In particular embodiments, the Internet marketing channel is display advertising and each item is a different display ad.

Also, determining an estimated miniature P&L may comprise:
for each item, determining at least one key parameter including at least one of revenue per conversion, estimated bid price for the item, and estimated number of clicks; and
for each item, determining the miniature P&L using the at least one key parameter.

In addition, the method may comprise determining the revenue per conversion for each item based on market stimuli other than the Internet marketing channel.

In some embodiments, generating revenue response data comprises:
ordering the revenues per investment amounts for the items from highest to lowest or lowest to highest.

Furthermore, generating revenue response data may comprise ordering the profits per investment amounts for the items from highest to lowest or lowest to highest.

Moreover, generating efficiency frontier response data may comprise generating the efficiency frontier response data based on the orderings in the revenue response data and in the profit response data.

In addition, the method may comprise:
selecting an investment for an item from the efficiency frontier response data; and
applying the selected investment as a budget for the Internet marketing channel.

According to yet another aspect, a computer readable medium having stored thereon a computer executable program for optimizing an Internet marketing channel for a multichannel marketing campaign is provided. The computer executable program when executed may cause a computer system to perform a method comprising:
determining an estimated miniature profit and loss (P&L) for each item of the Internet marketing channel, wherein the miniature P&L for each item links a potential investment in the item with estimated revenue and profit for the potential investment;
generating revenue response data for each item based on the miniature P&L for each item, wherein the revenue response data includes estimated revenues per investment amounts for the items;
generating profit response data for each item based on the miniature P&L for each item, wherein the profit response data includes estimated profits per investment amounts for the items; and
generating efficiency frontier response data from the revenue response data and the profit response data, wherein the efficiency frontier response data identifies a point of diminishing returns for each item based on the investment amount in each item.

While the embodiments have been described with reference to examples, those skilled in the art will be able to make various modifications to the described embodiments without departing from the scope of the claimed embodiments. Also, the embodiments described herein are generally described with respect to Internet marketing channels, but the embodiments may be used to optimize investments in other types of marketing channels as well. Furthermore, the embodiment may be used to optimize investments not only in marketing channels, but also to optimize investments in financial markets, or investments in other entities.

## Claims

1. A computer system (900) optimizing an Internet marketing channel for a marketing campaign, the computer system (900) comprising:
an optimization engine (913), executed by a processor, wherein the optimization engine includes
a statement unit (930) determining an estimated miniature profit and loss (P&L) for each item of the Internet marketing channel, wherein the miniature P&L for each item links a potential investment in the item with estimated revenue and profit for the potential investment;
a revenue response unit (940) generating revenue response data for each item based on the miniature P&L for each item, wherein the revenue response data includes estimated revenues per investment amounts for the items;
a profit response unit (950) generating profit response data for each item based on the miniature P&L for each item, wherein the profit response data includes estimated profits per investment amounts for the items; and
an efficiency frontier response unit (960) generating efficiency frontier response data from the revenue response data and the profit response data, wherein the efficiency frontier response data identifies a point of diminishing returns for each item based on the investment amount in each item; and
an optimization model database (910) storing a plurality of optimization models for optimizing the Internet marketing channel.

2. The computer system of claim 1, wherein the Internet marketing channel is paid search and each item is a paid search word or a position of a related ad displayed in response to a word.

3. The computer system of claim 1 or 2, wherein the statement unit (930) determines at least one key parameter including at least one of revenue per conversion, estimated bid price for the item, and estimated number of clicks for each item, and determines the miniature P&L using the at least one key parameter for each item; and
wherein the optimization engine preferably determines the revenue per conversion for each item based on market stimuli other than the Internet marketing channel.

4. The computer system of any one of claims 1 to 3, wherein the revenue response unit (940) orders the revenues per investment amounts for the items from highest to lowest or lowest to highest;
wherein the profit response unit (950) preferably orders the profits per investment amounts for the items from highest to lowest or lowest to highest; and
wherein the efficiency frontier response unit (960) preferably generates the efficiency frontier response data based on the orderings in the revenue response data and in the profit response data.

5. The computer system of any one of claims 1 to 4, further comprising:
a selecting unit selecting an investment for an item from the efficiency frontier response data.

6. The computer system of any one of claims 1 to 5, wherein the selected investment in the marketing campaign is applied by using the selected investment as a budget for the Internet marketing channel.

7. A method for optimizing an Internet marketing channel for a marketing campaign, the method comprising:
determining (22), using a processor, an estimated miniature profit and loss (P&L) for each item of the Internet marketing channel, wherein the miniature P&L for each item links a potential investment in the item with estimated revenue and profit for the potential investment;
generating (24) revenue response data for each item based on the miniature P&L for each item, wherein the revenue response data includes estimated revenues per investment amounts for the items;
generating (25) profit response data for each item based on the miniature P&L for each item, wherein the profit response data includes estimated profits per investment amounts for the items; and
generating (26) efficiency frontier response data from the revenue response data and the profit response data, wherein the efficiency frontier response data identifies a point of diminishing returns for each item based on the investment amount in each item.

8. The method of claim 7, wherein the Internet marketing channel is paid search and each item is a paid search word or a position of a related ad displayed in response to a word.

9. The method of claim 7 or 8, wherein the Internet marketing channel is display advertising and each item is a different display ad.

10. The method of any one of claims 7 to 9, wherein determining an estimated miniature P&L comprises:
for each item, determining at least one key parameter including at least one of revenue per conversion, estimated bid price for the item, and estimated number of clicks; and
for each item, determining the miniature P&L using the at least one key parameter.

11. The method of claim 10, comprising:
determining the revenue per conversion for each item based on market stimuli other than the Internet marketing channel.

12. The method of any one of claims 7 to 11, wherein generating revenue response data comprises at least one of the following steps:
ordering the revenues per investment amounts for the items from highest to lowest or lowest to highest;
ordering the profits per investment amounts for the items from highest to lowest or lowest to highest.

13. The method of claim 12, wherein generating efficiency frontier response data comprises:
generating the efficiency frontier response data based on the orderings in the revenue response data and in the profit response data.

14. The method of any one of claims 7 to 13, further comprising:
selecting an investment for an item from the efficiency frontier response data; and
applying the selected investment as a budget for the Internet marketing channel.

15. A computer readable medium having stored thereon a computer executable program for optimizing an Internet marketing channel for a multichannel marketing campaign, the computer executable program when executed causes a computer system to perform a method according to any one of claims 7 to 14.
